# EUROPEAN PATENT APPLICATION

(11) **EP 2 722 852 A1**
(43) Date of publication of application: **23.04.2014**
(21) Application number: 12189296.2
(22) Date of filing: 19.10.2012
(51) Int. Cl.: G21K 1/06

(54) **Double-multilayer monochromator**

(71) Applicant: Helmholtz-Zentrum Geesthacht Zentrum für Material- und Küstenforschung GmbH, 21502 Geesthacht (DE)
(72) Inventor: Störmer, Michael, 21031 Hamburg (DE); Haibel, Astrid, 12165 Berlin (DE)
(74) Representative: UEXKÜLL & STOLBERG

(57) **Abstract**

The present invention relates to a double-multilayer monochromator. The monochromator comprises a base, a housing moveably mounted on the base and having in one side thereof at least one inlet window for the inlet of a x-ray beam and in another side thereof an outlet window for the outlet a monochromatized x-ray beam, support means mounted in the housing to support opposed mirror pairs, wherein each of the mirrors has a coated surface, each of said coated mirror surfaces being coated with a multilayer coating in alternating layers of a scatterer material (A) having a thickness d_{A} and a spacer material (B) having a thickness d_{B}. The present monochromator provides an enhanced purity of the synchrotron beam, where even and odd orders of higher harmonics are rejected. This is achieved in that the ratio d_{A} : (d_{A}+d_{B}) on one of the facing mirrors of the mirror pairs is about 1:2 and the ratio d_{A} : (d_{A}+d_{B}) on the other of the facing mirrors of the mirror pairs is about 1:3.

## Description

The present invention relates to a double-multilayer monochromator.

### BACKGROUND OF THE INVENTION

Many experimental applications of synchrotron energy require monochromatic beams. Monochromators which can produce a monochromatic x-ray beam with narrow special wavebands are known. Depending on the application either high flux or high resolution multilayer monochromators are used in synchrotron applications to characterize e.g. the structural and morphological parameters of compact materials and thin films.

Monochromatic beams of high resolution are usually produced by perfect Si or Ge crystal monochromators. Such monochromators diffract a photon energy bandwidth of typically 10⁻⁴. Often, such fine resolution is unnecessary for monochromatic beam applications such as small-angle scattering, absorption and emission experiments.

Multilayer optics, despite lacking a true crystalline structure, produce Bragg-like scattering because of their alternating periodic structure of high-Z (scatterer) and low-Z (spacer) elements, and they operate at a typical incident angle of one to a few degrees with a bandwidth about 100 times larger than crystal optics. Consequently, multilayer optics provide a significant flux increase for X-ray applications, such as imaging and fluorescence, where the narrow bandwidth of the crystal optics is not required.

A typical double multilayer monochromator comprises a plurality of parallel pairs of facing multilayer mirrors mounted in a housing having therein an inlet window and an outlet window for each pair of mirrors. The mirrors consist of a polished substrate onto which two materials with different density are deposited in alternating layers. Commonly the one of the two materials have high atomic number (high-Z) and the other has a low atomic number (low-Z) in order to maximise the difference in electron density and thus enhance the efficiency with which these optics diffract an X-ray beam. Typical high-Z materials are selected from the group consisting of W, Mo and Ni. Typical low-Z materials are selected from the group consisting of C, Si, and B.

The layers are amorphous or partially polycrystalline but the periodic repetition of the bi-layers determines the performance of the multilayer. The thickness of these bi-layers is in the order of nanometers, and they act as interference reflectors for radiation with wavelength in the X-ray region.

The incoming X-ray beam on a multilayer is scattered, diffracted and absorbed in every layer and refracted at the layer interfaces. Diffraction occurs when the Bragg condition is fulfilled, i.e. an incoming beam with a certain wavelength (λ) in the x-ray region impinges the surface of the multilayer mirror in the Bragg geometry with glancing angle θ with respect to the layer's surface. The spectrum obtained is the constructive interference of the contribution of all layers separated by a distance d, all other wavelengths being more or less deleted by destructive interference. Furthermore, higher order reflections of the multilayer mirror are observable. Those higher order reflections are commonly designated *"2^{nd}, 3^{rd} or higher order harmonics".*

For most applications the design of the multilayer is optimised to deliver the highest intensity for the first order reflection or fundamental energy. Each pair of facing mirrors is coated with identical multilayer coatings which reflect X-rays at a wavelength which is dependent on the angle of incidence of the X-ray beams on the mirror and the nature of the multilayer coating. The mirrors are pivotally mounted in a row in the housing and are interconnected so that all of the motors pivot at the same time and amount so that the mirror surfaces always remain parallel to each other. The housing is usually moveable so that any pair of mirrors can be moved into position to intercept an X-ray beam travelling along a fixed path through the inlet window associated with that pair of mirrors to thereby provide a monochromatic X-ray beam of a desired wavelength. (See US-Patent 5,173,930 of Dec. 22, 1992.)

Lower and higher energies than the fundamental peak are commonly filtered or absorbed in order to suppress the total reflection or higher harmonic contributions (higher harmonic rejection). The lower energies might be attenuated with absorbers such as beryllium filters and the higher order reflections can be suppressed with the specular reflection from X-ray mirrors.

The ratio of layer thickness of the heavy material (high-Z) layer A (d_{A}) to the combined thickness (d) of the heavy material (high-Z) layer (d_{A}) and the light material (low-Z) layer (d_{B}), also referred to as the gamma parameter (Γ = d_{A}/(d_{A}+d_{B})), is commonly chosen so as to reject the second and other even order harmonics. This condition is fulfilled, when Γ is about 0.500. Thus, in common double multilayer monochromators, the gamma parameter for both mirrors is about 0.500. Double multilayer monochromators, where the gamma parameter for both mirrors is about 0.400, are also known. However, for values where Γ is 0.500 the odd orders of higher harmonics (m = 1, 3, 5, ...) are still permitted reflections, whereas second and other even order harmonics are rejected. (See PhD-Thesis of D.F. Marsà "Multilayer Optics for Macromolecular X-Ray Crystallography", University of Erlangen-Nürnberg, 2010.)

### SUMMARY OF THE INVENTION

There is still a need for a multilayer monochromator that provides an enhanced spectral purity of a synchrotron beam, and where also orders of higher harmonics are rejected, and whereby the photon flux is further increased.

Accordingly, the present invention provides a double-multilayer monochromator, comprising a base, a housing moveably mounted on the base and having in one side thereof at least one inlet window for the inlet of a X-ray beam and in another side thereof an outlet window for the outlet a monochromatized X-ray beam, support means mounted in the housing to support opposed mirror pairs, wherein each of the mirrors has a coated surface, each of said coated mirror surfaces being coated with a multilayer coating in alternating layers of a scatterer material (A) having a thickness d_{A} and a spacer material (B) having a thickness d_{B}, characterized in that the ratio d_{A} : (d_{A}+d_{B}) on one of the facing mirrors of the mirror pairs is about 0.500 and that the ratio d_{A} : (d_{A}+d_{B}) on the other of the facing mirrors of the mirror pairs is about 0.333.

In another embodiment, the present invention provides a method for producing a pair of coated mirrors for use in a double-multilayer monochromator, wherein alternating layers of a scatterer material (A) having a thickness d_{A} and a spacer material (B) having a thickness d_{B} are sputtered onto the surface of a support member, characterized in that the ratio d_{A} : (d_{A}+d_{B}) on one of the facing mirrors of the mirror pairs is about 0.500 and that the that the ratio d_{A} : (d_{A}+d_{B}) on the other of the facing mirrors of the mirror pairs is about 0.333.

### DESCRIPTION OF THE PREFERRED EMBODIMENTS

The term "about" means that the ratio d_{A} : (d_{A}+d_{B}) on one of the facing mirrors of the mirror pairs is 0.500±0.030, preferably 0.500±0.010, more preferably 0.500±0.005, and that the that the ratio d_{A} : (d_{A}+d_{B}) on the other of the facing mirrors of the mirror pairs is about 0.333±0.030, preferably 0.333±0.010, more preferably 0.333±0.005.

Preferably, the scatterer (high-Z) material is selected from the group consisting of W, Mo, and Ni. Preferably, the spacer material is selected from the group consisting of C, Si, B, Be, metal borides, metal carbides, metal nitrides, metal oxides, metal fluorides, metal silicides, and ceramics comprising semi-conducting materials and combinations of the same. Preferably, the spacer material is selected from the group consisting of Si, C, B, Be and B₄C.

Preferably the combined thickness (d_{A}+d_{B}) of one layer of scatter material (d_{A}) and one layer of spacer material (d_{B}) is from about 2 to 4 nm, more preferably from 2.5 to 3.0 nm, such as 2.81 nm. The number of double layers of scatterer and spacer materials is preferably chosen from 2 to 1000, preferably from 50 to 150, such as about 100.

According to a preferred embodiment, the substrate material of the support means for the multilayers is selected from Si, preferably the substrate material of the support means for the multilayers is made of single crystalline silicon. According to another embodiment, the substrate material of the support means is selected from quartz glass, optical glass, such as BK7 optical glass, or glass ceramics, such as Zerodur^{®} available from Schott AG, Germany. The support means shall preferably have a super-polished surface. Preferably the mirrors have a low spatial frequency roughness (a slope error) of greater than 1 mm⁻¹. According to another embodiment, the mirrors have a surface roughness of preferably less than 10 nm, more preferably less than 5 nm. Preferably, the interfacial diffusion between the reflector and spacer materials has a thickness of from 0.2 to 0.5 nm. Preferably the mirrors are prepared by sputtering using a magnetron sputtering source, which provides precise uniformity of the material layers and suitable thin-film growth mechanisms.

The sputtering is preferably carried out with fixed magnetron sputter sources, where the substrates are moved in front of the cathodes to generate large area coatings and thickness gradients. Preferably, the particle flux is oriented horizontally in order to minimize flaking and contamination on either the substrate or the sputter target. The sputter rates are preferably chosen from 0.1 to 1.0 nm/sec. Preferably, the deposition takes place at argon pressures of down to 1 µbar.

The invention is now further illustrated by the appended example, which shall not limit the invention.

The mirror surfaces of one or both of the mirrors may be planar, convex, or concave. According to one embodiment, both mirrors are planar. According to a different embodiment, for horizontal and vertical focussing, the Kirkpatrick-Baez optics are preferably used. Kirkpatrick-Baez optics consist of two parallel elliptic cylindrical mirrors, where the ellipse of second mirror is arranged vertically to the ellipse of the first mirror (the ellipses are crossed). Still further alternative embodiments may use Wolter optics, Schwarzschild optics, Montel optics, or EUVL optics.

### EXAMPLE

Depending on the required X-ray energy either two [W/Si] multilayers or two [Mo/B₄C] multilayers, both with a d-spacing of about 2.81 nm coated on long super-polished Si substrates were used. The fabrication of the monochromators was be done by the company Bruker ACS, the multilayer coating was be done in house by using a sputtering technique.

For a first test of the sputtered multilayers several [W/Si] multilayer structures coated on Si wafers were prepared. The coatings had specifications similar according to see Tab. 1 below.

The experiment has been performed using white beam. The source size has been limited by closing the primary slits to 0.1 mm x 0.1 mm. The complete setup was encased by lead sandwich plates to minimize the emission of scattered radiation. Single multilayers as well as combinations of the multilayer structures, i.e. double multilayer structures were tested. As detector, a Canberra germanium detector measuring the energy spectrum of the reflected X-ray beam was used. All measured spectrums were fitted and base line corrected.

**Table 1: Specification of the tested multilayer structures.**

| Material | [W/Si] |
|---|---|
| Dimensions | 60x20x0.625 mm |
| Number of layers | 100 |
| Sample 1 | D = 2.815 nm |
| | Γ = 0.497 |
| Sample 2 | D = 2.845 nm |
| | Γ = 0.493 |
| Samples 3 and 4 | D = 2.805 nm |
| | Γ = 0.337 |

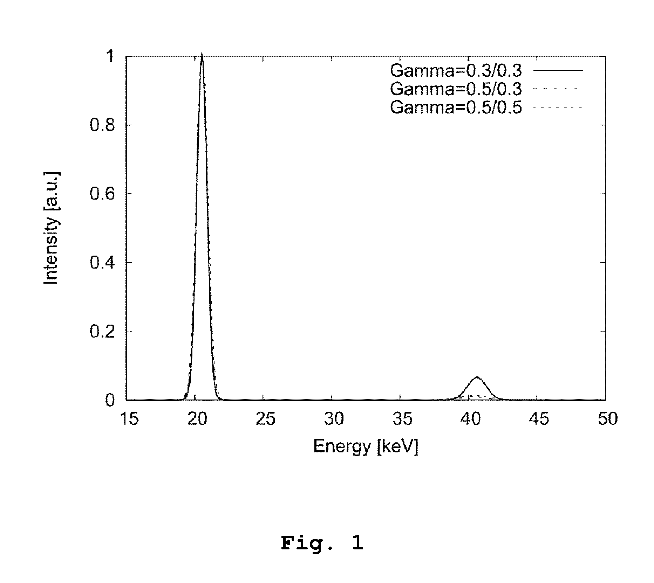

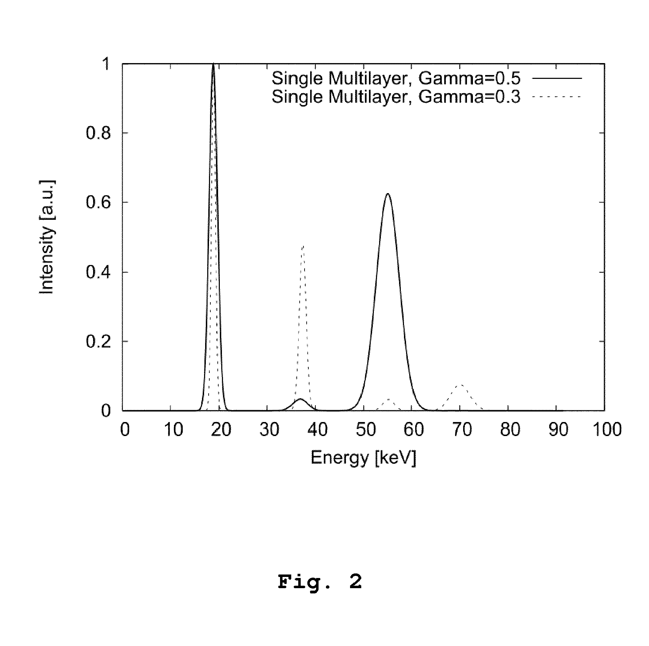

The incident angle was chosen at θ = 0.65° which corresponds with about E = 20 keV for the first harmonic reflection. **Fig. 1** shows the measured specular reflectivity of the single multilayers with Γ = 0.497 and Γ = 0.337. As expected for Γ = 0.497 the second harmonic reflection is widely suppressed whereas the third harmonic reflection is clearly to see. For Γ = 0.337 the second harmonic reflection appears, the third harmonic reflection is widely suppressed and the fourth harmonic reflection appears again. (The absolute intensity of the peaks could not be evaluated quantitatively because the intensity depends strongly on the energy spectrum of the white beam which has a maximum at about E = 35 keV and decreases strongly below 25 keV. Further beam oscillations have influenced the absolute intensity strongly during the measurements.) For the double multilayer test measurements two multilayers with Γ = 0.497, two multilayers with Γ = 0.337, and two multilayers with, one with Γ = 0.497 and the other with Γ = 0.337 were combined. **Fig. 2** shows the results.

The intensity of the higher harmonic reflections for the double multilayers is reduced compared with the single multilayer spectrums. As expected, the combination F=0.333/0.333 shows a higher intensity for the second harmonic reflection whereas for both other combinations the second harmonic reflection is strongly attenuated. Higher harmonics could not be detected within the resolution of the detector due to the limited energy range of the white beam also for higher energies and the stronger attenuation of this harmonics compared to the single multilayers.

## Claims

1. Double-multilayer monochromator, comprising a base, a housing moveably mounted on the base and having in one side thereof at least one inlet window for the inlet of a x-ray beam and in another side thereof an outlet window for the outlet a monochromatized x-ray beam, support means mounted in the housing to support opposed mirror pairs, wherein each of the mirrors has a coated surface, each of said coated mirror surfaces being coated with a multilayer coating in alternating layers of a scatterer material (A) having a thickness d_{A} and a spacer material (B) having a thickness d_{B}, **characterized in that** the ratio d_{A} : (d_{A}+d_{B}) on one of the facing mirrors of the mirror pairs is about 0.500 and that the ratio d_{A} : (d_{A}+d_{B}) on the other of the facing mirrors of the mirror pairs is about 0.333.

2. Double-multilayer monochromator according to claim 1, wherein the scatterer material is selected from the group consisting of W, Mo, and Ni.

3. Double-multilayer monochromator according to claim 1 or 2, wherein the spacer material is selected from the group consisting of C, Si, B, Be, and B₄C.

4. Double-multilayer monochromator according to any of the previous claims, wherein the combined thickness (d_{A}+d_{B}) of one layer of scatter material (d_{A}) and one layer of spacer material (d_{B}) is from about 1 to 10 nm, preferably from 2.5 to 4.5 nm.

5. Double-multilayer monochromator according to any of the previous claims, wherein the interfacial diffusion interphase between the scatterer and spacer materials has a thickness of from 0.2 to 0.5 nm.

6. Double-multilayer monochromator according to any of the previous claims, wherein the mirrors have a surface roughness of less than 10 nm, preferably less than 5 nm, more preferably less than 1 nm)

7. Method for producing a pair of coated mirrors for use in a double-multilayer monochromator, wherein alternating layers of a scatterer material (A) having a thickness d_{A} and a spacer material (B) having a thickness d_{B} are sputtered onto the surface of a support member, **characterized in that** the ratio d_{A} : (d_{A}+d_{B}) on one of the facing mirrors of the mirror pairs is about 0.500 and that the that the ratio d_{A} : (d_{A}+d_{B}) on the other of the facing mirrors of the mirror pairs is about 0.333.

8. Method according to claim 1, wherein the scatterer material is selected from the group consisting of W, Mo, and Ni.

9. Method according to claim 4 or 5, wherein the spacer material is selected from the group consisting of C, Si, B, and Be.

10. Method according to any of the previous claims, wherein the sputtering is carried out using a magnetron sputter source.
